# EUROPÄISCHE PATENTANMELDUNG

(11) **EP 0 954 076 A2**
(43) Veröffentlichungstag der Anmeldung: **03.11.1999**
(21) Anmeldenummer: 99107794.2
(22) Anmeldetag: 20.04.1999
(51) Int. Cl.: H02G 3/00

(54) **Hochleistungstelekommunikations-/Datenverbindung und -verbinder mit hoher Kontaktdichte mit Abgriff und Kontaktverdrängungsbaugruppe**

(30) Priorität: 27.04.1998 US 67508
(71) Anmelder: KRONE Aktiengesellschaft, 14167 Berlin (DE)
(72) Erfinder: Snow, Richard Herbert, Deer Trail, CO 80105 (US); Pickles, Timothy James, Aurora, CO 80013 (US); Johnson, Ross S., Hudsonville, Michigan (US)

(57) **Zusammenfassung**

Die Erfindung betrifft eine Telekommunikations- /Datenverbindungs- und - verbinderbaugruppe,
umfassend ein CDA-Baugruppenkabel (22) mit mehreren Übertragungsleitungen, eine erste und zweite Schnittstellenendbaugruppe (6, 8), die jeweils an einem Ende des CDA-Baugruppenkabels (22) angeordnet sind und jeweils umfassen,
einen Kontaktausrichtkörper (14) mit einem Leitungs- und einem Schnittstellenende, jeweils am Ende befindliche Kontaktelemente (62), die jeweils am Kontaktausrichtkörper (14) angeordnet sind und sich von einer Position neben dem Leitungsanschlußende in Richtung des Schnittstellenendes erstreckt, wobei jedes Kontaktelement (62) zwischne einer Kontakt- und einer Nichtkontaktposition bewegbar ist, wobei jedes Kontaktelement (62) einen Kontaktbereiche und einen Leistungsanschlußbereich für eine elektrische Verbindung mit einer Leitung umfaßt, ein an den jeweiligen Enden befindliches Gehäuse (12), wobei der Kontaktausrichtkörper (14) am zweiten Ende in einer verriegelten Position angeordnet ist, und die Gehäuse (12) des ersten und/oder zweiten Endes des Telekommunikations- /Datenverbindungs- und - verbinderbaugruppe mit ersten und/oder zweiten Enden eines weiteren Telekommunikations- /Datenverbindungs- und verbinderbaugruppe zusammensteckbar ausgebildet sind, wobei im zusammengesteckten Zustand die jeweiligen Kontaktelemente (62) im Kontaktbereich kontaktiert sind und zwischen die Kontaktelemente (62) ein Abgriff (138) einsteckbar ist, über den elektrische Signale von den Kontaktelementen (62) abgreifbar sind.

## Beschreibung

Die Erfindung betrifft eine Hochleistungstelekommunikations-Datenverarbeitungs- und -verbinderbaugruppe mit Abgriff und Kontaktverdrängungsbaugruppe und ein Verfahren zu dessen Herstellung.

Büroraum liegt oftmals in Form von Großraumbüros vor. Diese sind oft in Arbeitsbereiche (Kabinen) unterteilt. Der Beleger des Büroraums bestimmt in der Regel die wirtschaftlichste Ausnutzung der Stockwerksfläche für seinen eigenen Bedarf und wählt aus, wie die Stockwerksfläche durch die Verwendung tragbarer Wandtafeln und ähnlicher Strukturen in kleinere Arbeitsbereiche unterteilt werden soll. Mit sogenannten "Systemmöbeln" werden große Stockwerksflächen in kleinere Arbeitsbereiche (Kabinen) unterteilt. Bei Anordnungen mit Systemmöbeln werden in der Regel innere, aufrechte, raumteilende Tafeln verwendet, die sich über gerade oder gewinkelte Verbindungen zwischen zwei Tafeln oder über geeignete Verbindungen von drei oder vier Tafeln miteinander und aneinander verbinden lassen, um eine große Mehrzahl individueller Arbeitsbereiche zu definieren. Derartige Tafeln haben in der Regel eine geringere Hohe als der Abstand Boden-Decke und wirken mit anderen Möbelelementen zusammen, um einen ausgestatteten Arbeitsbereich zu definieren.

Jeder Arbeitsbereich muß hinsichtlich elektrischem Strom und Kommunikation adequat verkabelt werden. Es sind verschiedene Systeme und Bauteile einschließlich modularer elektrischer Systeme entwickelt worden, die mit den Tafeln zusammenwirken und sich ohne weiteres an diesen montieren lassen. Dies gestattet eine Umkonfigurierung der Tafeln und gestattet die Zufuhr von Strom zu den Arbeitsbereichen.

Es sind Systeme vorgeschlagen worden, um den Einsatz einer großen Zahl herkömmlicher vierpaariger Kommunikationskabel zu vermeiden, die durch Bodenschächte oder abgehängte Decken zu den verschiedenen Arbeitsbereichen geführt werden. Zu den Beispielen derartiger Bestrebungen nach dem Stand der Technik zählen die in den US-Patenten Nr. 5,272,277, 5,160,276 und 4,928,303 offenbarten Systeme und Vorrichtungen. Es sind zahlreiche Systeme vorgeschlagen worden, die Stromleitungen und Systemmöbel betreffen. Viele dieser Systeme weisen Merkmale auf, die bestimmte Probleme betreffen, die mit der Stromübertragung und -verteilung mit Systemmöbeln zusammenhängen.

Aus US-Patent 4,781,609 ist ein elektrisches Mehrkreissystem bekannt, das mit Wandtafeln verwendet wird. Bei dem elektrischen System handelt es sich um ein Siebenleitersystem, das drei stromführende Leiter und drei Nulleiter zum Definieren von drei getrennten elektrischen Stromkreisen mit jeweils einem eigenen Nulleiter verwendet. Eine tragbare Stromabgriffseinheit (eine Steckdoseneinheit) kann in den Stromblock zur selektiven Ineingriffnahme mit einem beliebigen der drei Stromkreise eingesteckt werden. Obwohl dieses System hinsichtlich des Stroms und der Wahl einer der verschiedenen Stromkreise am Ort große Vorteile mit sich bringt, ist das System nach der Plazierung der Wandtafeln und Verwendung des Abgriffsmerkmals mit sehr vielen Bauteilen verbunden, was ein typisches Problem bei der Stromverteilung ist.

Aus US-Patent 5,236,370 ist ein weiteres elektrisches System zur Verwendung mit raumteilenden Innenwänden bekannt. Das System wird vorgefertigt und enthält innerhalb von Kanälen, die sich innerhalb der raumteilenden Elemente erstrecken, längliche Kabelbäume. Benachbarte Kabelbäume werden elektrisch durch flexible elektrische Verbindungsleitungen verbunden, die steckerartige Verbindungen mit Stromblöcken erzeugen. Dieses System weist hinsichtlich der einfachen Verwendung bedeutsame Vorteile auf. Allerdings enthält das System wieder zahlreiche Bauteile, die die Kosten beträchtlich erhöhen. Außerdem enthält das System wieder Merkmale, die sich mit der Stromverteilung beschäftigen und mit Problemen, die mit der Stromverteilung verbunden sind.

Der Erfindung liegt daher das technische Problem zugrunde, ein Hochleistungsübertragungs- und Verbindersystem mit hoher Kontaktdichte für Telekommunikations- und Datenanwendungen zu schaffen, wobei der Verbinder eine gute physische und elektrische Verbindung aufweist, so daß Übertragungsteile bei gleichbleibender hoher Signalgüte, auch bei Hochfrequenzanwendungen, verbunden werden können, und wobei das System einen einfachen Abgriff von Signalen an dem Verbinder gestattet, sowie ein Herstellungsverfahren für die Baugruppe zur Verfügung zu stellen.

Die Lösung des technischen Problems ergibt sich durch die Merkamle der Patentansprüche 1 und 17. Weitere vorteilhafte Ausgestaltungen ergeben sich aus den Unteransprüchen.

Erfindungsgemäß ist eine Telekommunikations-/Datenverbindungs- und - verbinderbaugruppe bereitgestellt, die ein Übertragungskabel enthält, das mehrere Übertragungsleitungen, eine erste Schnittstellenendebaugruppe und eine zweite Schnittstellenendebaugruppe umfaßt. Die erste Schnittstellenendebaugruppe umfaßt einen ersten Kontaktausrichtkörper mit einem Leitungsanschlußende und einem Schnittstellenende. Eine am ersten Ende befindliche Mehrzahl von Kontaktelementen ist vorgesehen, wobei jedes der Kontaktelemente von dem ersten Kontaktausrichtkörper positioniert und ausgerichtet wird und sich von einer Position neben dem Leitungsanschlußende in Richtung des Schnittstellenendes erstreckt. Jedes der auf der ersten Seite befindlichen Kontaktelemente kann zwischen einer Kontaktposition und einer Nichtkontaktposition bewegt werden. Jedes der auf der ersten Seite befindlichen Kontaktelemente enthält einen Kontaktbereich und einen Leitungsanschlußbereich für eine elektrische Verbindung mit einer Leitung. Ein am ersten Ende befindliches Abschirmgehäuse ist vorgesehen, wobei sich der erste Kontaktausrichtkörper in dem am ersten Ende befindlichen Abschirmgehäuse in einer verriegelten Position befindet. Die zweite Schnittstellenendebaugruppe umfaßt einen zweiten Kontaktausrichtkörper mit einem Leitungsanschlußende und einem Schnittstellenende. Eine am zweiten Ende befindliche Mehrzahl von Kontaktelementen ist vorgesehen, wobei jedes der Kontaktelemente von dem zweiten Kontaktausrichtkörper positioniert und ausgerichtet wird und sich von einer Position neben dem Leitungsanschlußende in Richtung des Schnittstellenendes erstreckt. Jedes der auf der zweiten Seite befindlichen Kontaktelemente kann zwischen einer Kontaktposition und einer Nichtkontaktposition, wobei jedes der auf der zweiten Seite befindlichen Kontaktelemente einen Kontaktbereich und einen Leitungsanschlußbereich für eine elektrische Verbindung mit einer Leitung enthält. Ein am zweiten Ende befindliches Abschirmgehäuse ist vorgesehen, wobei sich der zweite Kontaktausrichtkörper in dem am zweiten Ende befindlichen Abschirmgehäuse in einer verriegelten Position befindet. Die erste Endabschirmung und die zweite Endabschirmung sind jeweils im wesentlichen identisch und können zusammengesteckt werden. Diese Endabschirmungen lassen sich auch mit einer ersten Endabschirmung und einer zweiten Endabschirmung einer im wesentlichen identischen Telekommunikations-/Datenverbindungs- und - verbinderbaugruppe zusammenstecken. Von jedem der Kontaktausrichtkörper getragene Kontaktelemente befinden sich in einer Kontaktposition, wenn eine zugeordnete Endabschirmung sich in einer zusammengesteckten Position befindet. Es ist ein Abgriff vorgesehen, der zwischen Kontaktelemente gesteckt werden kann, um Signale abzugreifen, die von den Kontaktelementen geführt werden.

Der Abgriff enthält eine Abgriffsübertragungsleitung und verbundene Kontaktteile. Die Abgriffskontaktteile kontaktieren elektrisch eine auf der ersten Seite befindliche Mehrzahl von Kontakten und/oder eine auf der zweiten Seite befindlichen Mehrzahl von Kontaktelementen.

Ein Kontaktverdrängungsmittel ist vorgesehen, um Kontakte zwischen der Kontaktposition und der Nichtkontaktposition zu bewegen, was das Einstecken des Abgriffs zwischen der auf der ersten Seite befindlichen Mehrzahl von Kontaktelementen und der auf der zweiten Seite befindlichen Mehrzahl von Kontaktelementen gestattet. Das Kontaktverdrängungsmittel enthält eine erste Kontaktöffnungsvorrichtung, die mit der auf der ersten Seite befindlichen Mehrzahl von Kontaktelementen verbunden ist. Die erste Kontaktöffnungsvorrichtung wird von dem Abgriffmittel in Eingriff genommen, um Kontakte zwischen der Kontaktposition und der Nichtkontaktposition zu bewegen, was ein Einstecken des Abgriffs zwischen der auf der ersten Seite befindlichen Mehrzahl von Kontakten und der auf der zweiten Seite befindlichen Mehrzahl von Kontakten gestattet. Das Kontaktverdrängungsmittel enthält vorzugsweise auch eine zweite Kontaktöffnungsvorrichtung, die mit der auf der zweiten Seite befindlichen Mehrzahl von Kontakten und einer Spitze des Abgriffsmittels verbunden ist. Die erste Kontaktöffnungsvorrichtung und die zweite Kontaktöffnungsvorrichtung sind zum Bewegen von Kontakten zwischen der Kontaktposition und der Nichtkontaktposition gedacht.

Die Erfindung enthält auch ein Verfahren zum Herstellen einer Telekommunikations-/Datenverbindungs- und -verbinderbaugruppe einschließlich Bereitstellen eines Kontaktausrichtkörpers mit Nuten für Kontakte und Räumen zur Aufnahme von aderseitigen Kontaktenden. Die Kontakte sind in den Nuten positioniert, wobei Aderkontaktenden sich in eine Ader und aderseitige Kontaktendenaufnahmeräume erstrecken. Ein Kontaktverdrängungselement ist vorgesehen, das mit den Enden der Kontakte an dem Schnittstellenende verbunden ist. Auch eine Aderführung mit mehreren Aderkanälen ist vorgesehen. Die Aderführung weist ein Kabelende mit geringer Breite und ein Kontaktausrichtkörperende mit einer größeren Breite auf. Die Aderführungskanäle weisen jeweils einen Aderweg mit im wesentlichen identischer Länge auf, der sich von der Kabelseite zu der Kontaktausrichtkorperseite erstreckt. Es wird ein Kabel mit Aderanschlußenden verwendet. Diese Aderanschlußenden sind in den Führungskanälen der Aderführung positioniert, und ein Kontaktteil der Anschlußenden erstreckt sich aus den Führungskanälen heraus. Die Kontaktteile sind mit entsprechenden Kontakten an aderseitigen Enden der Kontakte elektrisch verbunden. Das Kabel, die Aderführung und die Kontaktverdrängungsbaugruppe werden durch Aufbringen eines überformten Gehäuses verbunden. Dieses überformte Gehäuse wird aufgebracht, indem ein Teil des Kabels, die Aderführung und ein Teil der Kontaktverdrängungsbaugruppe in eine Form positioniert und zur Bildung des überformten Gehäuses Material in die Form gespritzt wird. Die verbundenen Elemente mit dem überformten Gehäuse bilden eine einzelne Kontaktverdrängungsbaugruppe.

Die Aderkontaktenden und die kontaktaderseitigen Enden werden vorzugsweise durch Ultraschallbonden (bzw. Ultraschallschweißen) elektrisch verbunden. Der Kontaktausrichtkörper enthält vorzugsweise Formgehäuseaufnahmefassungen zur Aufnahme von Material des überformten Gehäuses darin. Das überformte Gehäuse definiert vorzugsweise Tragschienen.

Es sind mehrere einzelne Kontaktverdrängungsbaugruppen vorgesehen. Diese werden in ein Abschirmelement gesteckt, das mehrere Räume bildet. Das Abschirmelement enthält auch mehrere Ausrichtteile, die jedem der Räume entsprechen. Zwei im wesentlichen identische Abschirmelemente können durch Verbinden der Ausrichtteile zusammengesteckt werden. Die Ausrichtteile (Ausrichtfahnen) sind vorzugsweise Vaterteile und Mutterteile in abwechselnder Anordnung, wobei die beiden Abschirmungen mit im wesentlichen identischer Form durch Ineingriffnahme der Ausrichtteile, wobei die Abschirmungen einander zugewandt sind und eine bezüglich der anderen um 180° gedreht ist, zusammengesteckt werden.

Die Abschirmungen sind vorzugsweise aus einem Kunststoff mit eingebetteten metallischen Elementen gebildet. Die metallischen Elemente können beispielsweise aus rostfreiem Stahl bestehen. Auf diese Weise wird eine wichtige Abschirmungsfunktion gebildet (Abschirmen eines zusammengesteckten Kontaktsatzes von benachbarten zusammengesteckten Kontakten). Dies beeinflußt auf vorteilhafte Weise die Leistung der Verbinderschnittstellenenden, wenn sie mit einem im wesentlichen identischen Schnittstellenende zusammengesteckt sind. Nach Einstecken eines Kontaktausrichtkörpers jeder einzelnen Kontaktverdrängungsbaugruppe in jeden Raum der Abschirmung sind die Kontaktausrichtkörper fest verriegelt. Wenn die Abschirmungen zusammengesteckt werden, sind die Kontakte für den Durchgang elektrischer Signale in Eingriff genommen.

Es ist ein Indikatormarkierelement für eine erste Seite der Abschirmung vorgesehen, und für eine andere Seite der Abschirmung ist ein anderes Indikatormarkierelement vorgesehen. Jedes Indikatormarkierelement enthält aufnehmende Nuten zur Aufnahme mehrerer der Tragschienen zum Zusammenwirken mit den einzelnen Kontaktverdrängungsbaugruppen und der Abschirmung zur Bildung eines Verbinderblocks.

Die Erfindung wird nachfolgend anhand eines bevorzugten Ausführungsbeispiels näher erläutert. Die Fig. zeigen:
- Fig. 1: eine perspektivische Ansicht, die eine für sechs Stromkreise ausgelegte Kontaktverdrängungsbaugruppe mit zwei Schnittstellenenden zeigt;
- Fig. 2A: von links oben eine perspektivische Ansicht eines Abschirmungselements der Kontaktverdrängungsbaugruppe von Fig. 1;
- Fig. 2B: von oben rechts eine perspektivische Ansicht des Abschirmungselements von Fig. 2A;
- Fig. 3A: eine vergrößerte Ansicht der Einzelheit A von Fig. 2A;
- Fig. 3B: eine vergrößerte Ansicht der Einzelheit B von Fig. 2B;
- Fig. 3C: eine vergrößerte Ansicht der Einzelheit C von Fig. 2A;
- Fig. 4: eine Querschnittsansicht von zwei Abschirmungselementen in einer Position, in der sie zum Zusammenstecken orientiert sind, wobei das Zungenelement in Umrissen in der verriegelten S Steckposition gezeigt ist;
- Fig. 5: eine auseinandergezogene Ansicht eines Schnittstellenendes, wobei der Abgriff in einer Position zur Ineingriffnahme gezeigt ist;
- Fig. 6: eine perspektivische Ansicht von Schnittstellenenden einer einzelnen Kontaktverdrängungsbaugruppe (CDA = contact displacement assembly), einer Komponente der für sechs Stromkreisen ausgelegten CDA von Fig. 1;
- Fig. 7A: eine Querschnittsansicht eines Schnittstellenendes der einzelnen CDA-Baugruppe von Fig. 4;
- Fig. 7B: eine Draufsicht auf ein Kabel mit verdrillten Doppeladern, die durch eine Aderführung gehen und an Kontakte des Kontaktausrichtkörpers eines Schnittstellenendes angeschlossen sind;
- Fig. 8: eine perspektivische Ansicht der Aderführung;
- Fig. 9A: eine perspektivische Ansicht des Kontaktausrichtkörpers, wobei Kontakte an einem Leiterrahmen angebracht sind und eine verbundene Kontaktverdrängungsvorrichtung darin eingesteckt ist, vor dem Anschluß an die Adern und die Aderführung;
- Fig. 9B: eine perspektivische Ansicht des Kontaktausrichtkörpers, wobei Kontakte an einem darin eingesteckten Leiterrahmen angebracht sind, vor dem Anschluß an die Adern und die Aderführung;
- Fig. 9C: eine Querschnittsansicht, die den Kontaktausrichtkörper vor dem Einstecken der Kontakte zeigt;
- Fig. 9D: von unten eine perspektivische Vorderansicht, die den Kontaktausrichtkörper vor der Verbindung mit den Kontakten und der Kontaktverdrängungsvorrichtung zeigt;
- Fig. 10A: eine weggeschnittene Ansicht, die einen Teil des Kabels und Enden verdrillter Doppelleitungsanschlüsse zeigt;
- Fig. 10B: eine Querschnittsansicht des Kabels;
- Fig. 11: von vorne eine perspektivische Ansicht der Innenseite der Farbindikatormarkierung der für sechs Stromkreise ausgelegten Kontaktverdrängungsbaugruppe von Fig. 1;
- Fig. 12: eine vordere perspektivische Ansicht der Innenseite des Stromkreisanzeigemarkiertragelements der für sechs Stromkreise ausgelegten Kontaktverdrängungsbaugruppe von Fig. 1;
- Fig. 13A: von links oben eine perspektivische Ansicht des Abgriffs gemäß der Erfindung;
- Fig. 13B: von rechts unten eine perspektivische Ansicht des Abgriffs gemäß der Erfindung;
- Fig. 13C: eine Vorderansicht des Hauptabgriffselements vor dem Anschließen des Hauptabgriffselements an Leitungen eines mit einem Formteil des Abgriffs verbundenen Kabels;
- Fig. 14: eine weggeschnittene seitliche Teilansicht, die den Kontakt zwischen Kontakten zusa0mmengesteckter Schnittstellen darstellt; und
- Fig. 15: eine seitliche Schnittansicht, die eine zusammengesteckte Schnittstelle mit einem eingesteckten Abgriff zeigt, wobei eine Leitung abgegriffen wird und eine nachgeschaltete Leitung getrennt wird.

Unter Bezugnahme insbesondere auf die Zeichnungen umfaßt die Erfindung eine allgemein mit 10 bezeichnete, für mehrere Stromkreise ausgelegte Kontaktverdrängungsbaugruppe (CDA = contact displacement assembly). Die Baugruppe enthält eine erste Schnittstellenendebaugruppe 6 und eine identische (abgesehen von kleineren Toleranzschwankungen im wesentlichen identische) zweite Schnittstellenendebaugruppe 8. Obwohl die Schnittstellenenden 6 und 8 identisch sind, weisen sie Vaterteile und Mutterteile (Ausrichtfahnen) auf, wodurch sie in einem Zustand mit zusammengesteckten Kontakten positioniert werden können. Jedes Schnittstellenende 6, 8 ist zur Verwendung zur Steckverbindung mit anderen für mehrere Stromkreise ausgelegten CDAs gedacht, um eine Verbindung von Übertragungsleitungen an den Kontaktschnittstellen zu liefern und einen Abgriffsbereich zum Abgreifen der Leitungen zu liefern. Die für mehrere Stromkreise ausgelegte Kontaktverdrängungsbaugruppe 10 ist von besonderem Nutzen bei Anordnung in modularen Büromöbelbauteilen wie beispielsweise modularen Wänden, mit denen Bürokabinen hergestellt werden. Mehrere Kontaktkreisbaugruppen (beispielsweise drei) können parallel für achtzehn verschiedene einzelne parallele Kontaktverdrängungsbaugruppen vorgesehen sein, was ein Mehrfaches von zwei Doppelleitungen bildet.

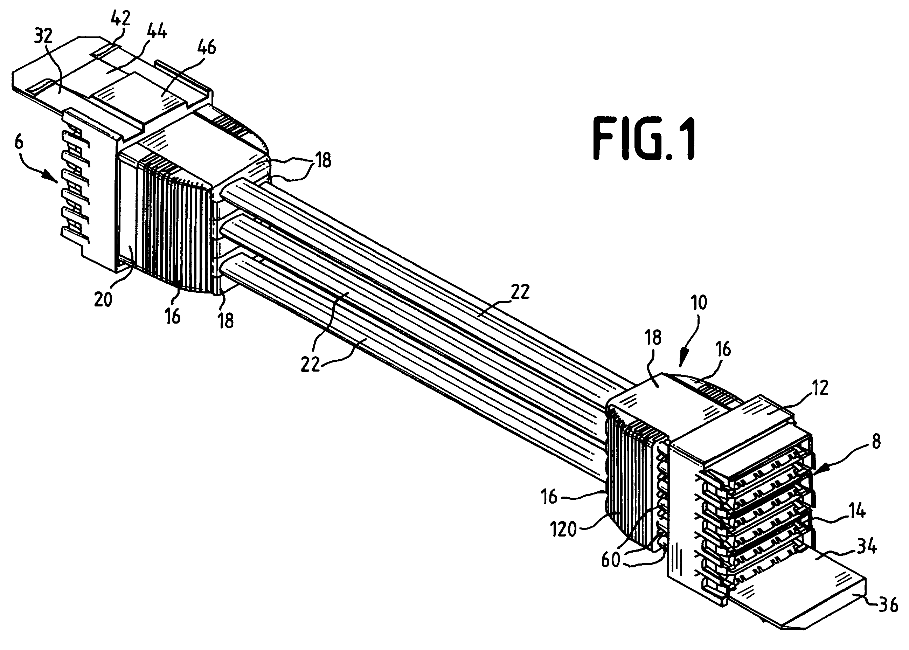

Fig. 1 zeigt eine für sechs Stromkreise ausgelegte CDA 10, wobei jedes Schnittstellenende 6, 8 ein Abschirmgehäuse 12 aufweist, das mehrere Kontaktausrichtkörper 14 trägt. Wie weiter unten erörtert, können die Kontaktausrichtkörper 14 in das Abschirmgehäuse 12 einschnappen, wo sie gehalten werden, um eine Anschlußseite an einer Kontaktschnittstelle zu bilden. Die Kontaktausrichtkörper 14 bilden Teil der einzelnen Kontaktverdrängungsausrichtungs-(CDA)-Baugruppen 18. In der Position, wie sie in Fig. 1 gezeigt ist, wobei die einzelnen CDAs 18 von der Abschirmung 12 getragen werden, kann ein Farbindikatormarkierelement 16 mit den einzelnen CDA-Baugruppen 18 verbunden sein. Außerdem kann ein Stromkreisindikatorelement 20 mit den einzelnen CDA-Baugruppen 18 auf einer Nichtabgriffssteckseite jeder Schnittstelle verbunden sein. Auf einer Abgriffsseite der Schnittstelle liegen die einzelnen CDA-Baugruppen 18 frei.

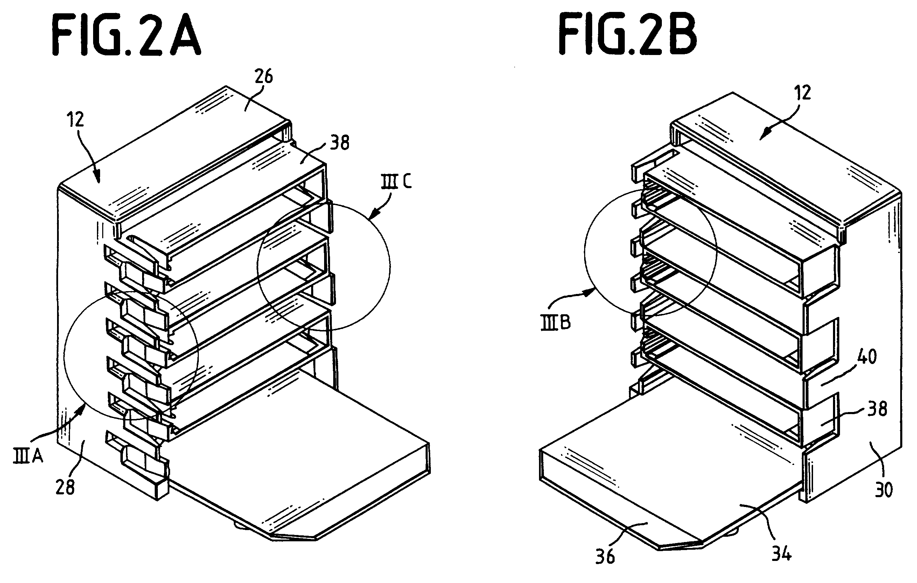

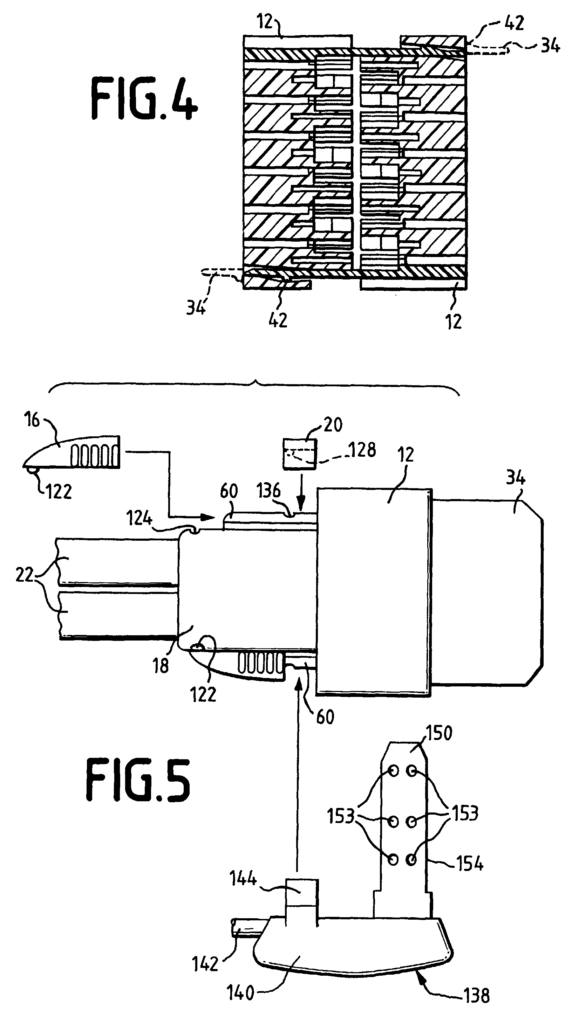

Fig. 2A zeigt von links oben eine perspektivische Ansicht eines Gehäuses, insbesondere eines Abschirmgehäuses 12. Das Abschirmgehäuse 12 ist vorzugsweise eine einstückig geformte Struktur. Das Abschirmgehäuse 12 ist vorzugsweise aus einem Kunststoff mit eingebetteten Fasern aus rostfreiem Stahl oder Elementen aus rostfreiem Stahl zur Bildung einer elektrischen Abschirmfunktion gebildet. Die Abschirmung 12 weist eine obere Fläche 26, eine Abgriffszugangsseite 28, eine Nichtzugangsseite 30 sowie einen Boden 32 auf (siehe Fig. 1). Der Boden 32 enthält eine Zunge 34, die eine Eingriffsfunktion zur Verbindung von zwei Schnittstellenenden liefert. Die Zunge 34 enthält eine Zungenfase 36. Zur Bildung des Eingriffs enthält jede Abschirmung ein männliches Umhüllungsteil 38 und ein weibliches Umhüllungsteil 40 (diese werden auch als Ausrichtfahnen bezeichnet). Diese beiden Umhüllungsteile 38, 40 werden zur Verbindung der beiden Schnittstellenenden zusammengesteckt. Die Zungenfase 36 sorgt für ein einfaches Einstecken der Zunge 34 zwischen eine obere Fläche des männlichen Umhüllungsteils 38 und eine innere Fläche des oberen Teils 26. Auf der Unterseite bzw. der Bodenseite 32 enthält die Zunge 34 eine Eingriffsfase 42 mit einer Verriegelungshinterkante. Dies gestattet ein Verriegeln einer Schnittstellenseite durch Ineingriffnahme der Eingriffsfase 42 mit der Hinterkante des oberen Teils 26, wie in Fig. 4 im Umriß gezeigt. Die Schräge 44 unterstützt das Verriegeln der Baugruppen durch Liefern einer Reibfläche. Der Stoppteil 46 liefert eine Stoppfunktion bei Kontakt der Vorderkante des Stoppteils 46 mit einer Vorderkante des Abschirmungsoberteils 26. Schnittstellenseiten von einzelnen CDA-Baugruppen 18 sind miteinander über ein einzelnes CDA-Baugruppenkabel 22 verbunden.

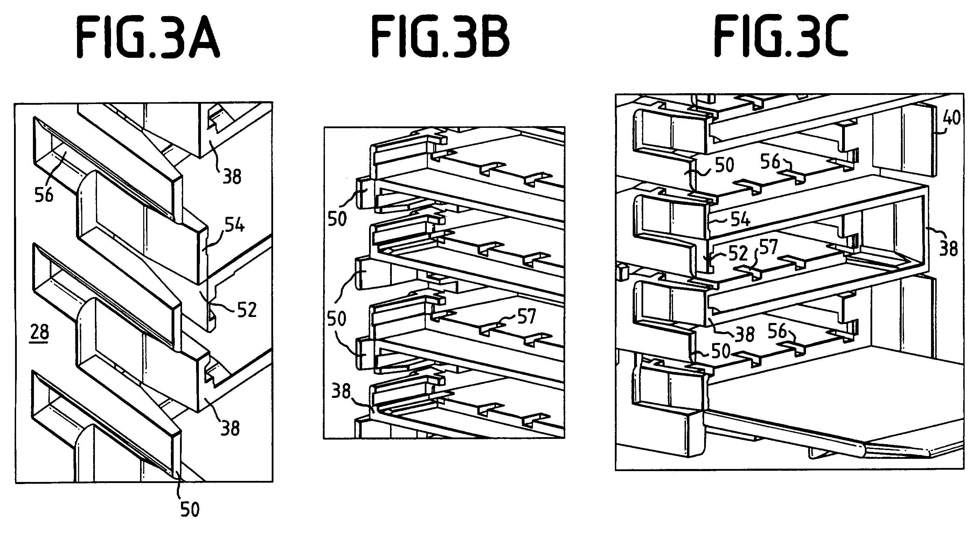

Fig. 3A, 3B und 3C liefern vergrößerte Ansichten der Abschirmung 12. Wie in Fig. 3A zu sehen, begrenzt auf der Zugangsseite 28 ein Abgriffseintrittsteil 50 eine Oberkante einer Seite eines Abgriffsschlitzes 56, der durch zusammengesteckte Schnittstellenenden definiert ist. Auf der Abgriffsseite 28 enthält der männliche Umhüllungsteil 38 eine weibliche Ausnehmung 52 und einen männlichen Teil 54. Der männliche Teil 54 ist kegelförmig, um eine einfache Verbindung der beiden Teile für einen Steckkontakt zu gestatten. Wie aus Fig. 3B ersichtlich, weist das Abschirmgehäuse 12 unmittelbar hinter jedem Umhüllungsteil (sowohl männliches Umhüllungsteil 38 und weibliches Umhüllungsteil 40) Verriegelungsschlitze 57 auf. Diese Verriegelungsschlitze 57 werden zum Fixieren der einzelnen CDA-Baugruppen 18 an dem Abschirmgehäuse 12 verwendet. Die Abschirmung 12 ist in einer Position gezeigt, in der es zum Zusammenstecken mit einem anderen Abschirmgehäuse 12 in Fig. 4 orientiert ist.

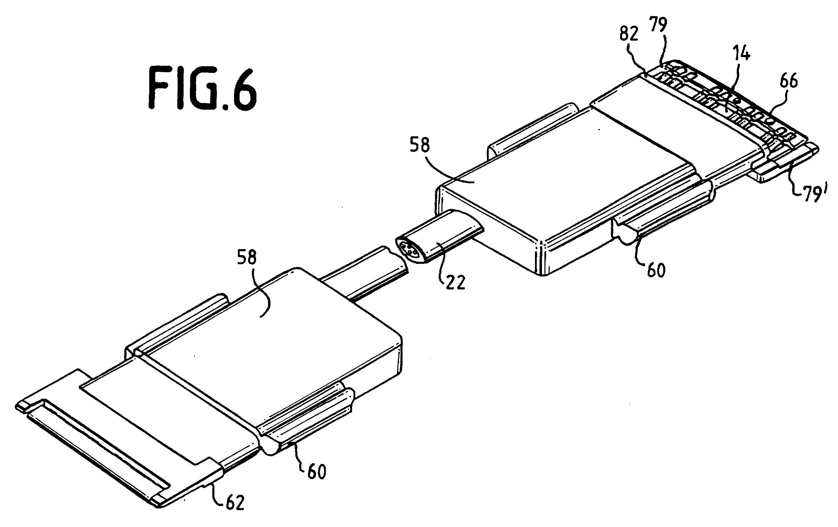

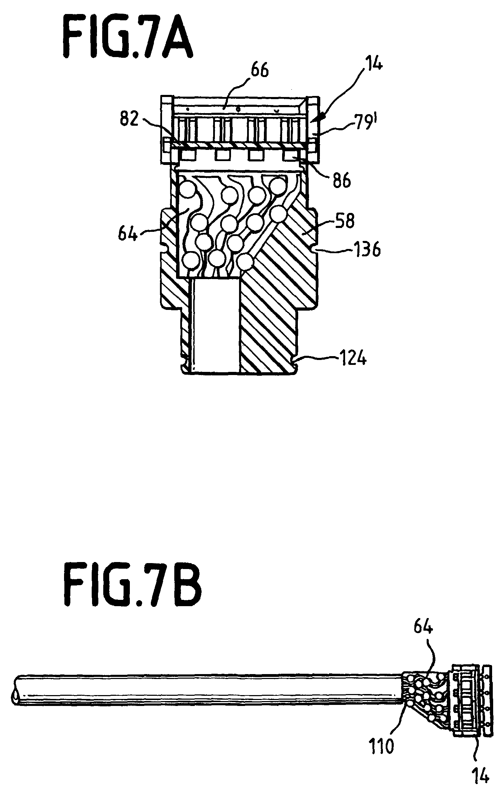

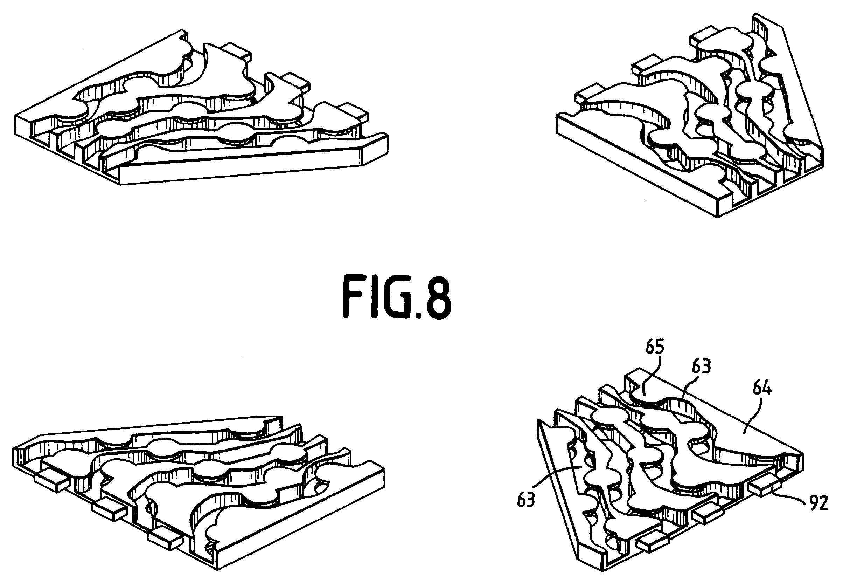

Die Fig. 6 zeigt eine einzelne CDA-Baugruppe 18 mit einem einzelnen Schnittstellenelementende und Teilen des zugeordneten Kabels 22. Jedes Schnittstellenende der CDA-Baugruppe 18 enthält ein überformtes Gehäuse 58. Dieses überformte Gehäuse 58 hat die Funktion, die verschiedenen Bauteile jedes Schnittstellenendes der CDA-Baugruppe 18 zu verbinden. Das überformte Gehäuse 58 enthält Tragschienen 60. Diese werden weiter unten erörtert. Jede Baugruppe 18 enthält auch einen Kontaktausrichtkörper 14 mit Kontakten 62 und einer Kontaktöffnungsvorrichtung 66. Jedes Schnittstellenende der Baugruppe 18 enthält auch eine Aderführung 64 (siehe Fig. 7A, 7B und Fig. 8).

Fig. 7A zeigt eine Querschnittsansicht eines Schnittstellenendes der CDA-Baugruppe 18 unmittelbar über der Kontaktfläche. Es ist ersichtlich, daß sich das überformte Gehäuse 58 in einen Bereich des Kontaktausrichtkorpers 14 erstreckt, um das überformte Gehäuse 58 und den Ausrichtkörper 14 zu verbinden. Durch das Verbinden mit dem Teil 40 nimmt das überformte Gehäuse 58 auch die Aderführung 64 auf und umgibt sie. Das überformte Gehäuse 58 erstreckt sich auch in die Kanäle 88, die für verdrillte Doppelleitungsanschlußenden 110 vorgesehen sind. Dies wird unten näher erörtert.

Fig. 7B zeigt ein Kabel 22 mit verdrillten Doppelleitungsanschlußenden 110, die sich in die Aderführung 64 erstrecken. Die verdrillten Doppelleitungsanschlußenden 110 erstrecken sich auch in Kontaktausrichtkörper 14, wo sie mit dem Kontakt 62 verbunden sind und diesen kontaktieren. Die in Fig. 7B gezeigte Struktur ist die einzelne CDA-Baugruppe 18 unmittelbar vor dem Aufbringen des überformten Gehäuses 58.

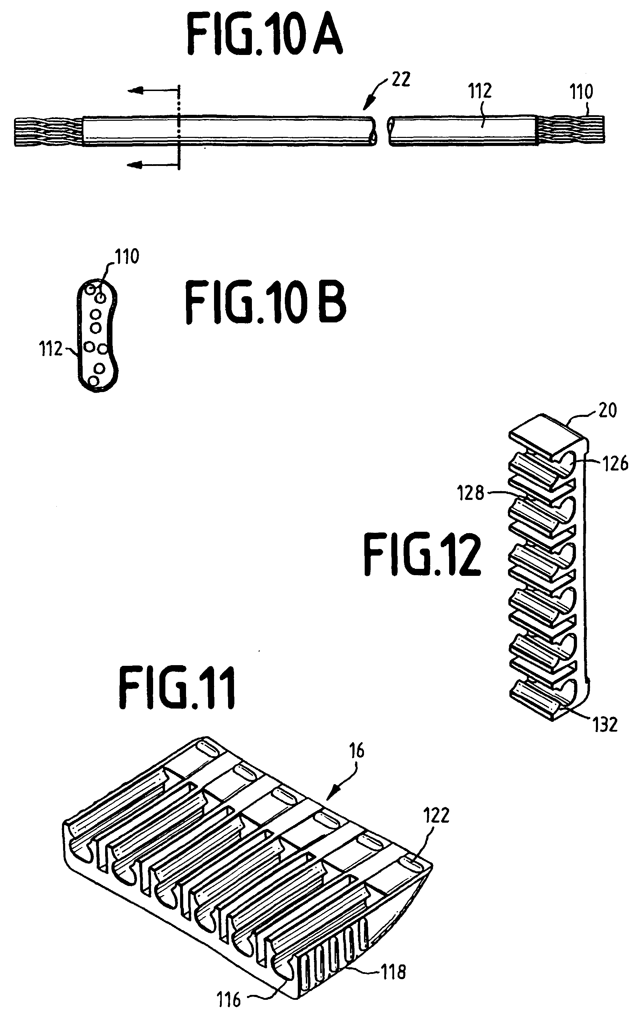

Fig. 8 zeigt die Aderführung 64 mit verschiedenen Kanälen 63. Diese Kanäle 63 sind von Bedeutung, da sie Kanäle für verdrillte Doppelleitungen liefern, wobei die Kanäle 63 von einem Ende zu einem entgegengesetzten Ende im wesentlichen die gleiche Länge aufweisen. Auf diese Weise können verdrillte Doppeladern 110 wie in Fig. 10 gezeigt verwendet werden, die Anschlußenden aufweisen, die im wesentlichen die gleiche Länge für jede verdrillte Doppelleitung 110 haben. Dies führt hinsichtlich der Herstellung zu einem bedeutsamen Vorteil. Die Aderführung 64 enthält Ausrichtausstülpungen 92, die das Ausrichten der Aderführung 64 und des Kontaktausrichtkörpers 14 bei der Herstellung erleichtern. Die Aderführung 64 enthält auch Überhangteile 65, die dazu beitragen, die verdrillte Doppelleitung innerhalb der Kanäle 63 der Aderführung 64 zu halten.

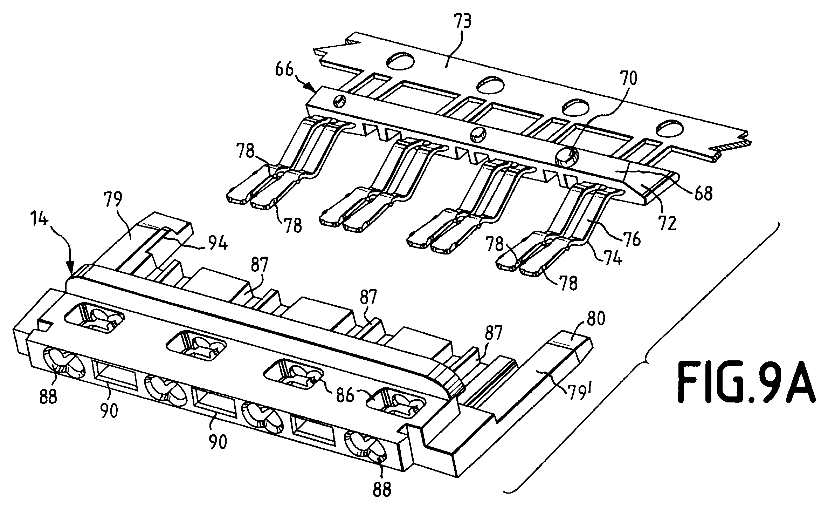

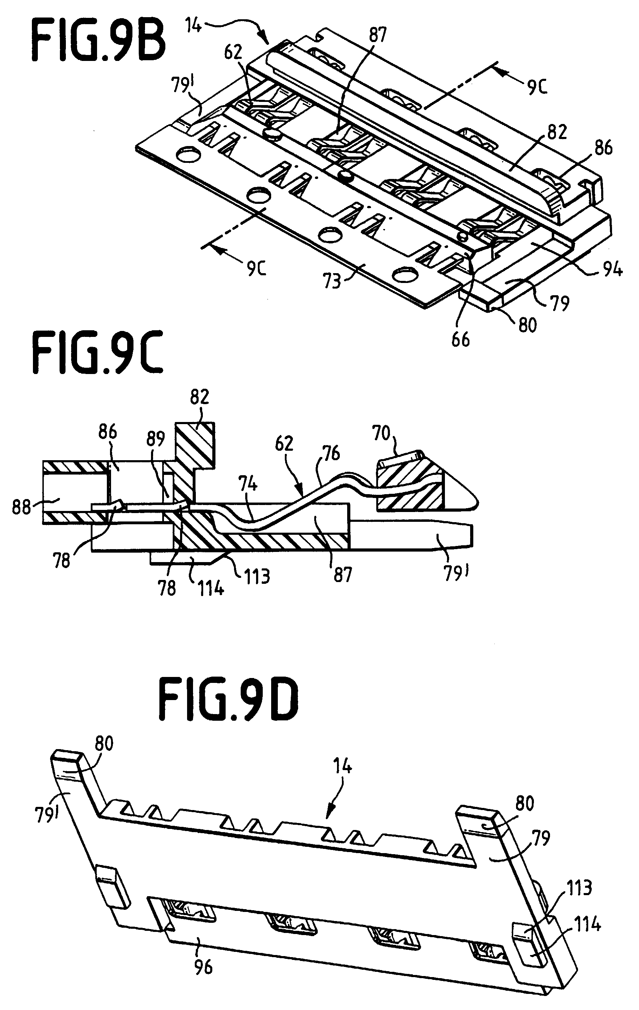

Fig. 9B zeigt den Kontaktausrichtkörper 14 mit zugeordneten, immer noch mit einem Leiterrahmen 73 verbundenen Kontaktelementen 62 (der Leiterrahmen 73 wird später entfernt) und einer Kontaktverdrängungsvorrichtung (oder Kontaktöffnungsvorrichtung) 66. Wie aus Fig. 9A ersichtlich, weist die Kontaktöffnungsvorrichtung 66 einen Abgriffsnockenmitnehmer 68 mit verriegelnden Ausstülpungen (oder Pfosten) 70 zum Verriegeln in der Kontakt-position auf. Der Nockenmitnehmer 68 enthält eine Fasenschräge 72, die ein Einstecken des Abgriffs 138 gestattet und die Bewegung der Kontaktöffnungsvorrichtung 66 zum Bewegen des Kontaktteils 76 aus dem Eingriff heraus einleitet, wenn ein Abgriff 138 zwischen Kontakte von zusammengesteckten Schnittstellen eingesteckt wird. Jedes Kontaktelement 62 enthält einen Federteil mit Krümmung 74 und Widerhaken 78.

Wie aus Fig. 9A und 9D ersichtlich, weist jeder Kontaktausrichtkörper 14 ein Vorderende mit einem Aufnahmebereich 79 und einem ähnlichen abgriffseitigen Aufnahmebereich 79' auf. Diese weisen an ihrer vordersten Kante eine Eingriffsfase 80 auf. Wie aus Fig. 9A und 9D ersichtlich, ist jede Fase 80 auf einer oberen und einer unteren Seite jedes Ausrichtkörpers 14. An einer oberen Seite jedes Kontaktausrichtkörpers 14 ist ein Stoppkantenelement 82 vorgesehen. An der Rückseite des Kontaktausrichtkörpers 14 sind Aderkanäle 88 sowie Ausrichtschlitze 90 (siehe Fig. 9A).

Fig. 9D zeigt die Unterseite des Kontaktausrichtkörpers 14. Diese enthält einen Formgehäuseaufnahmeraum 96. Aus einer Betrachtung von Fig. 9D und 9A geht hervor, daß das überformte Gehäuse 58 sich bis zu der Rückseite der Stoppkante 82 erstreckt, sich bis in die Formgehäuseaufnahmefassungen 86 und in den Formgehäuseaufnahmeraum 96 erstreckt, wodurch der Kontaktausrichtkörper 14, die Aderführung 64 und die elektrisch verbundenen Kontakte und verdrillten Doppelleitungsanschlußenden vereint werden. Diese Montagetechnik weist den weiteren Vorteil auf, daß das überformte Gehäuse 58 (siehe Fig. 6, 7A und 7B) den Kabelmantel 112 umgibt, die verdrillten Doppelleitungsanschlußenden 110 umgibt und sich in die Anschlußendplatten der Aderführung 64 erstreckt. Das überformte Gehäuse 58 umgibt auch einen hinteren Teil des Kontaktausrichtkörpers 14 und erstreckt sich in die Formgehäuseaufnahmefassungen 86, umgibt die Aderkontaktschnittstelle, nimmt die Kontaktwiderhaken 78 in Eingriff und füllt auch den Formgehäuseaufnahmeraum 96. Dies führt unter anderem zu einem Verbinden des Kabelmantels 112 und des Kontaktausrichtkörpers 14 derart, daß keine Beanspruchung der individuellen verdrillten Doppelleitungsanschlußenden 110 und keine Beanspruchung an der Kontaktschnittstelle zwischen verdrillten Doppelleitungsanschlußenden 110 und Kontaktelementen 62 vorliegt. Es kann auch eine alternative Ausführungsform der Erfindung vorgesehen sein, bei der keine Aderführung 94 vorgesehen ist. In diesem Fall ist ein Paar Anschlußenden 110 an Kontaktelementen 62 angeschweißt oder auf andere Weise elektrisch angeschlossen und angebracht, und das überformte Gehäuse 58 ist aufgebracht. Das überformte Gehäuse 58 sorgt für eine Isolierung der verdrillten Doppelleitungen 110. Die Ausrichtschlitze 90 sind nicht erforderlich.

Fig. 9C zeigt eine Querschnittsansicht des Kontaktausrichtkörpers 14. Bei dieser Ansicht ist der Aufnahmebereich 79' zusammen mit der Eingriffsfase 80 gezeigt. Weiterhin ist ein Ausrichtbereich 87 gezeigt, der Wände und einen Bodenträger zum Positionieren eines Kontaktelements 62 umfaßt. Unterhalb und hinter der Stoppkante 82 ist ein Raum 89 vorgesehen, der mit der Formgehäuseaufnahmefassung 86 und auch mit den Aderkanälen 88 in Verbindung steht. Dieser Raum 89 nimmt das aderseitige Ende des Kontaktelements 62 auf. Obwohl der Raum 89 mit der Öffnung 86 und den Aderkanälen 88 in Verbindung steht, sind die oberen Seitenbereiche des Raums 89 durch aus Kunststoff (oder andere geeignete Materialien) bestehende Wände des Kontaktausrichtkörpers 14 derart begrenzt, daß bei Einstecken der Aderenden von Kontaktelementen 62 in den Raum 89 die Widerhaken 78 das Kontaktausrichtkörpergehäuse 14 in Eingriff nehmen. Das Kontaktelement 62 kann nicht wirksam oder leicht aus dem Kontaktausrichtkörper 14 entfernt werden, nachdem sie in den Raum 89 eingesetzt worden sind, da sich die Widerhaken 78 bei einem Ziehen des Kontaktelements 62 in eine Entfernrichtung in das aus Kunststoff bestehende Kontaktausrichtkörpergehäuse 14 über dem Raum 89 eingraben. Genauer gesagt sind die Widerhaken 78 derart gewinkelt, daß das Einstecken des Aderendes in den Raum 89 relativ glatt verläuft, aber ein etwaiges Herausziehen des Kontaktelements 62 wirkungsvoll verhindert wird, da die Widerhaken 78 das Material des Teile des Raums 89 begrenzenden Ausrichtkörpers 14 in Eingriff nehmen.

Fig. 10a und 10b zeigen Aspekte des Kabels 22 für eine einzelne CDA-Baugruppe 18. Das Kabel 22 enthält den Kabelmantel 112 und die verdrillten Doppelleitungsanschlußenden 110. Fig. 10b zeigt die relative Position der verschiedenen verdrillten Doppelleitungen 110 und des Mantels 112.

Fig. 11 zeigt die Innenseite eines Farbindikatormarkierelements 16. Das Element 16 enthält einen Schienenaufnahmeteil 116 zur Aufnahme von Enden der Schienen 60 eines Schnittstellenendes der CDA 10. Jede Schiene 60 ist von einer einzelnen CDA-Baugruppe 18. Der Schienenaufnahmeteil 116 enthält einen schmalen Grat derart, daß das Element 16 über die verschiedenen Schienen 60 der verschiedenen Baugruppen 18 gleitet. Verriegelungsausstülpungen 122 wirken mit der Verriegelungsnut 124 zusammen, die in dem überformten Gehäuse 58 jedes Schnittstellenendes jeder Baugruppe 18 ausgebildet ist (siehe Fig. 7A). Eine weitere Verriegelungsnut 136 ist ebenfalls in jeder Schiene 60 jedes Formgehäuses 58 vorgesehen. Die Verriegelungsausstülpung 122 gestattet es dem Farbindikatormarkierelement 16, auf den Schienen 60 der Baugruppen 18 zu gleiten und in Position verriegelt zu werden.

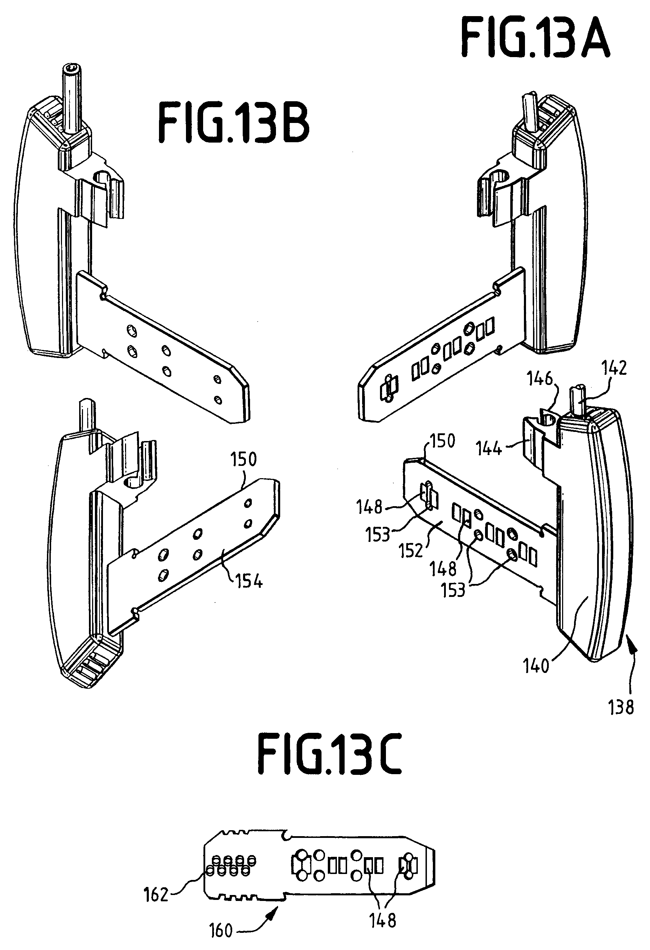

Fig. 12 zeigt einen Stromkreisindikator 20, der mit mehreren Baugruppen 18 an einem Schnittstellenende verbunden ist, und zwar auf einer einer Zugangsseite entgegengesetzten Seite. Mit den Schienen 60 auf der Zugangsseite wird das Abgriffselement 138 wie unten beschrieben fixiert. Der Stromkreisindikator 20 enthält eine Schienenaufnahmenut 126 mit einem Boden. Die Nut definiert auch einen Spalt geringer Abmessung, wodurch die Nut von dem Stromkreisindikatorelement 20 gleitend an die Schiene 60 angebracht oder aufgeschnappt werden kann. Eine Ausstülpung 128 erstreckt sich von dem Nutboden aus nach außen und liefert ein Verriegelungselement zur Erstreckung in die Verriegelungsnut 136 des Formgehäuses 58.

Fig. 13A und 13B zeigen Ansichten einer Abgriffsbaugruppe 138. Mit jeder zusammengesteckten Schnittstelle können verschiedene Abgriffsbaugruppen verwendet werden. Jeder Abgriff 138 wird verwendet, um Leitungen an einer Schnittstelle von Kontakten von einzelnen CDA-Baugruppen 18 aus zusammengesteckten Schnittstellenenden von zwei CDAs 10 abzugreifen. Jeder Abgriff 138 enthält einen Körper 140 mit Griffbereich. Eine Abgriffsleitung 142 erstreckt sich in den Körper hinein, in dem die verschiedenen Adern der Abgriffsleitung 142 mit Leiterbahnen verbunden sind, die in oder auf einem Abgriffsschlitzeinsteckelement 150 vorgesehen sind. Die Leiterbahnen erstrecken sich bis zu Kontakten 148. Auf einer Kontaktseite 152 des Abgriffsschlitzeinsteckelements 150 sind mehrere Kontakte 148 vorgesehen. Der Abgriffskörper 140 ist mit einem Schieneneingriffsteil 144 versehen. Dieses definiert eine Schienenaufnahmenut 146 für die Schiene 60. Innerhalb dieser Struktur kann die Abgriffsanordnung 138 mit zusammengesteckten Schnittstellenenden in Eingriff gelangen und an der freiliegenden Schiene 60 auf der Abgriffsseite eines Schnittstellenkörpers wie beispielsweise des Schnittstellenkörpers 8 fixiert werden (siehe Fig. 1).

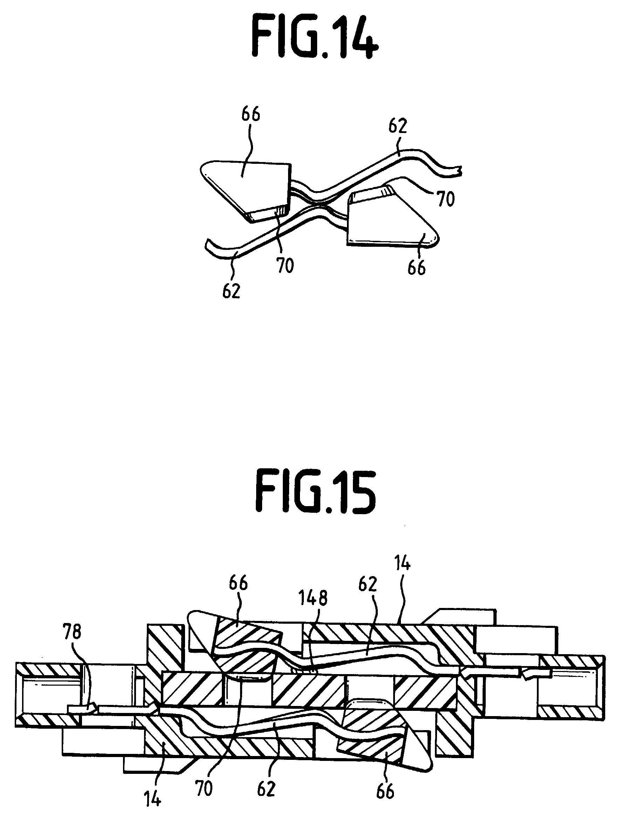

Wie aus Fig. 14 ersichtlich, befinden sich die Kontakte bei zusammengesteckten Schnittstellenenden in elektrischen Kontaktpositionen, wobei die Kontaktteile 76 in physischem Kontakt stehen, um eine elektrische Verbindung herzustellen. Wie aus einem Vergleich von Figur 13A mit Figur 13B hervorgeht, enthält jedes Abgriffsschlitzeinsteckelement 150 eine Kontaktseite 152 und eine entgegengesetzte Seite 154. Wenn das Abgriffsschlitzeinsteckelement 150 in den Einsteckschlitz 56 gesteckt wird (siehe Fig. 1 und Fig. 3A), ist der Abgriff zur Verbindung des Schieneneingriffsteils 144 mit den freiliegenden Schienen 60 der Baugruppen 18 positioniert, wobei die Kontakte 148 mit Kontakten 62 an der vorgeschalteten Seite der Übertragungsleitung verbunden sind (siehe Fig. 5). Die nachgeschaltete Seite der Übertragungsleitung wird unterbrochen, da der Kontakt 62 auf der Innenseite der Schnittstelle (in dem vorgeschalteten Schnittstellenelement) aufgrund der steuernden Flächen des Abgriffsnockenmitnehmers 68 (Ausstülpungen 70, und die Fläche des Abgriffs gegenüber der Seite 154) außer Kontakt gehalten wird. Dieser Zustand ist in Fig. 15 gezeigt. Eine ausführlichere Erörterung einer ähnlichen Kontaktverdrängungsanordnung ist in der EP-97 10 8131.0 erörtert, auf das hiermit ausdrücklich Bezug genommen ist.

Die Ausstülpungen bzw. Pfosten 70 in der Kontaktöffnungsvorrichtung 66 sind derart, daß die Kontakte 62 in einer Nichtkontaktposition gehalten werden, während das Einsteckelement 150 zwischen die Kontakte gesteckt wird. Wenn der Abgriff 138 richtig positioniert ist, erstrecken sich die Pfosten bzw. Ausstülpungen 70 in Öffnungen 153. Es ist möglich, Öffnungen 153 nur auf der Kontaktseite 152, diese aber nicht auf der entgegengesetzten Seite 154 zu haben. Auf diese Weise wird ein Satz von Kontakten 62 in einer Nichtkontaktposition gehalten. Da auf der Seite 154 keine Kontakte 148 vorgesehen sind, können die Löcher 153 allerdings auch auf der Seite 154 vorgesehen sein. Auf diese Weise können sich die Kontakte in eine Kontaktposition bewegen, obwohl kein elektrischer Kontakt hergestellt wird, und die nachgeschaltete Leitung wird getrennt.
Die Abmessung des Abgriffsschlitzeinsteckelements 150 und der Abgriffsschlitz 56, definiert durch in Eingriff stehende Teile von Abschirmungen von zusammengesteckten Schnittstellenelementenden, ist vorzugsweise derart gewählt, daß nur sehr wenig zwischen die zusammengesteckten Schnittstellenenden geraten und die Kontaktverdrängungsanordnung beschädigen kann. Die Form der verschiedenen Teile 50, 54 und 52 des Abschirmgehäuses 12 erleichtern das Definieren eines kleinen Schlitzes mit keinem weiteren Zugangsraum, weder auf der Nichtzugangsseite 30 noch der Zugangsseite 28.

Fig. 13C zeigt eine Vorderansicht des Hauptabgriffselements 160 vor dem Beschichten oder Anformen des Abgriffskörpers 140. Wie ersichtlich, sind Anschlußpunkte 162 zum Anlöten, Schweißen oder auf andere Weise Anschließen von Leitungen des Abgriffskabels 142 vorgesehen. Das Abgriffselement 160 ist vorzugsweise in Form einer Leiterplatte hergestellt. Die Leiterplatte weist Leiterbahnen oder andere entsprechende Verbindungsleitungen auf, die von Kontaktpunkten 162 zu Kontakten 148 verlaufen.

Die Vorrichtung wird montiert, indem, wie in Fig. 10a gezeigt, bei 22 ein Kabel vorgesehen und in den Kanälen der Aderführung 64 verdrillte Doppelleitungsanschlußenden 110 plaziert werden. Wie angemerkt, hat jedes Anschlußende 110 die gleiche Länge. Die Aderführung wird so plaziert, daß sie mit dem Kontakte 62 und die Kontaktverdrängungsvorrichtung 66 tragenden Kontaktausrichtkörper 14 in Kontakt steht. Der elektrische Kontakt zwischen den Anschlußenden 110 und den Kontakten 62 wird vorzugsweise durch Ultraschallschweißen hergestellt. Andere bekannte Verbindungen wie beispielsweise das Anlöten der Verdrängungskontakte oder anderes Zusammenfügen für einen elektrischen Kontakt können vorgesehen sein. Ultraschallschweißen wird bevorzugt, da es bessere Eigenschaften aufweist, einschließlich der, daß kein bedeutender Widerstand hinzukommt.

Eine Struktur, wie sie in Fig. 5B gezeigt ist, ergibt sich aus den obigen Schritten. Diese Struktur wird danach überformt, um das überformte Gehäuse 58 zu liefern. Wenn dies an beiden Enden des Kabels vorgesehen ist, ist das Ergebnis eine einzelne Kontaktverdrängungsbaugruppe 18, wie in Fig. 4 gezeigt. Die einzelne CDA -Buagruppe 18 weist zwei Schnittstellenenden auf. Ein Ende der CDA-Baugruppe 18 wird in ein Abschirmgehäuse 12 gesteckt. Das andere Ende wird in ein anderes Abschirmgehäuse 12 gesteckt. Durch die Eingriffsfase 113 an dem Boden jedes Kontaktausrichtkörpers 14 wird das Einstecken eines Schnittstellenendes der CDA-Baugruppe 18 erleichtert. Die Eingriffsausstülpung 114 weist eine hintere Kante auf, die bei Eingriff mit einer Verriegelungsnut 57 der Abschirmung 12 für eine Verriegelungsfunktion sorgt (siehe Fig. 3B und 3C).

Auf der Nichtzugangsseite kann über Schienen 60 ein Stromkreisindikator 20 durch Schienen 60 und die Verbindung zwischen Nut 124 und Ausstülpung 134 angeschlossen sein. Auf ähnliche Weise können zwei Farbindikatormarkierungen auf Schienen 60 auf jeder Seite gleiten, wodurch eine Verriegelungsausstülpung 122 jedes Elements 16 eine jeweilige, auf den Schienen 60 vorgesehene Verriegelungsnut 124 in Eingriff nimmt. Mit diesen Schritten, die hinsichtlich jedes Schnittstellenelements 8 und 6 durchgeführt worden sind, ist eine Baugruppe 10, wie in Fig. 1 gezeigt, hergestellt. Die Schnittstellenenden der CDA 10 sind identisch, und jedes Schnittstellenelement der Baugruppe 10 kann mit einem identischen Schnittstellenelement einer anderen identischen Baugruppe 10 zusammengesteckt werden. Das Zusammenstecken von Schnittstellenenden erfolgt, indem die Zunge 34 zwischen die untere Fläche der Oberseite 26 der Abschirmung 12 und die obere Fläche des männlichen Umhüllungsteils 38 gesteckt wird. Jeder männliche Umhüllungsteil 38 erstreckt sich in einen weiblichen Umhüllungsteil 40, wobei verschiedene Teile 52, 54 und 50 auf der Abgriffsseite in Eingriff geraten. Wenn die Eingriffsfase 42 derart positioniert ist, daß die hintere Kante die hintere Kante der Abschirmungsoberseite 26 in Eingriff nimmt, ist der Schnittstellenkörper einer Baugruppe 10 mit dem Schnittstellenkörper einer anderen Baugruppe 10 verbunden. In dieser Position befinden sich die Kontakte 62 in einer Kontaktposition derart, daß Signale netzabwärts übertragen werden.

Der Abgriff 138 kann auf der Abgriffsseite 28 der Abschirmungen der zusammengesteckten Schnittstellenenden eingesteckt werden. Der Abgriff 138 kann über die Schiene 60 und das Eingriffsteil 144 fixiert werden. Wenn der Abgriff 138 richtig eingesteckt ist, geht der Eingriffsteil 144 mit der Schiene 60 in der eingesteckten Position eine Verbindung ein. Dies unterbricht den elektrischen Kontakt zwischen Kontakten 62 von zwei Schnittstellen von zwei Baugruppen 10. Dies stellt über die Abgriffskontakte 148 einen Abgriff her.

Während besondere Ausführungsformen der Erfindung ausführlich gezeigt und beschrieben worden sind, um die Anwendung der Grundlagen der Erfindung zu veranschaulichen, so versteht sich, daß die Erfindung auf andere Weise umgesetzt werden kann, ohne von derartigen Grundsätzen abzuweichen.

### Bezugszeichenliste

- 6): Schnittstellenendebaugruppe
- 8): Schnittstellenendebaugruppe
- 10): Kontaktverdrängungsbaugruppe /CDA
- 12): Gehäuse
- 14): Kontaktausrichtkörper
- 16): Farbindikatormarkierelement
- 18): Kontaktverdrängungsausrichtungsbaugruppe / CDA-Baugruppe
- 20): Stromkreisindikatorelement
- 22): CDA-Baugruppenkabel
- 26): obere Fläche
- 28): Abgriffzugangsseite
- 30): Nichtzugangsseite
- 32): Boden
- 34): Zunge
- 36): Zungenfase
- 38): männliches Umhüllungsteil
- 40): weibliches Umhüllungsteil
- 42): Eingriffsfase
- 44): Schräge
- 46): Stoppteil
- 50): Abgriffeintrittsteil
- 52): weibliche Ausnehmung
- 54): männliches Teil
- 56): Abgriffschlitz
- 57): Verriegelungsschlitze
- 58): Gehäuse
- 60): Tragschienen
- 62): Kontakt
- 63): Kanal
- 64): Aderführung
- 66): Kontaktöffnungsvorrichtung
- 68): Abgriffsnockenmitnehmer
- 70): Ausstülpung / Pfosten
- 72): Fasenschräge
- 73): Leiterrrahmen
- 74): Krümmung
- 76): Kontaktteil,
- 78): Widerhaken
- 79): Aufnahmebereich
- 80): Fase
- 82): Stoppkante
- 86): Formgehäuseaufnahmefassungen
- 87): Ausrichtbereich
- 88): Aderkanäle
- 89): Raum
- 90): Ausrichtschlitz
- 92): Ausrichtausstülpungen
- 94): Aderführung
- 96): Formgehäuseaufnahmeraum
- 110): Doppelleitungsanschlußenden
- 112): Kabelmantel
- 114): Eingriffsausstülpung
- 116): Schienenaufnahmeteil
- 122): Verriegelungsausstülpungen
- 124): Verriegelungsnut
- 134): Ausstülpung
- 136): Verriegelungsnut
- 140): Abgriffskörper
- 142): Abgriffskanal
- 144): Schieneneingriffsteil
- 146): Schienenaufnahmeelement
- 148): Kontakte
- 150): Kontaktöffnungsvorrichtungseingriffsfläche / Abgriffsschlitzeinsteckelement
- 152): Kontaktseite
- 153): Öffnung
- 154): Seite
- 160): Abgriffselement
- 162): Anschlußpunkte

## Patentansprüche

1. Telekommunikations- /Datenverbindungs- und -verbinderbaugruppe, umfassend ein CDA-Baugruppenkabel (22) mit mehreren Übertragungsleitungen, eine erste und zweite Schnittstellenendbaugruppe (6, 8), die jeweils an einem Ende des CDA-Baugruppenkabels (22) angeordnet sind und jeweils umfassen,
einen Kontaktausrichtkörper (14) mit einem Leitungs- und einem Schnittstellenende, jeweils am Ende befindliche Kontaktelemente (62), die jeweils am Kontaktausrichtkörper (14) angeordnet sind und sich von einer Position neben dem Leitungsanschlußende in Richtung des Schnittstellenendes erstreckt, wobei jedes Kontaktelement (62) zwischen einer Kontakt- und einer Nichtkontaktposition bewegbar ist, wobei jedes Kontaktelement (62) einen Kontaktbereich und einen Leitungsanschlußbereich für eine elektrische Verbindung mit einer Leitung umfaßt, ein an den jeweiligen Enden befindliches Gehäuse (12), wobei der Kontaktausrichtkörper (14) am zweiten Ende in einer verriegelten Position angeordnet ist, und die Gehäuse (12) des ersten und/oder zweiten Endes des Telekommunikations- /Datenverbindungs- und - verbinderbaugruppe mit ersten und/oder zweiten Enden eines weiteren Telekommunikations- /Datenverbindungs- und verbinderbaugruppe zusammensteckbar ausgebildet sind, wobei im zusammengesteckten Zustand die jeweiligen Kontaktelemente (62) im Kontaktbereich kontaktiert sind und zwischen die Kontaktelemente (62) ein Abgriff (138) einsteckbar ist, über den elektrische Signale von den Kontaktelementen (62) abgreifbar sind.

2. Baugruppe nach Anspruch 1, dadurch gekennzeichnet, daß der Abgriff (138) eine Abgriffleitung (142) und mit der Abgriffsleitung (142) verbundene Kontakte (148) umfaßt, die mit den Kontakten (62) der zusammengesteckten Schnittstellenendebaugruppe (6,8) eine elektrische Verbindung bilden

3. Baugruppe nach Anspruch 1 oder 2, dadurch gekennzeichnet, daß den Kontaktelementen (62) elastische Mittel zum Tragen des Kontaktbereiches zugeordnet sind, wodurch der Kontaktbereich zwischen der Kontaktposition und der Nichtkontaktposition bewegbar ist.

4. Baugruppe nach einem der vorangegangenen Ansprüche, dadurch gekennzeichnet, daß den Kontaktelementen (62) Kontaktverdrängungemittel zum Bewegen der Kontaktelemente zugeordnet sind, mittels derer die Kontaktelemente (62) zwischen der Kontaktposition und der Nichtkontaktposition bewegbar sind und ein Einstecken des Abgriffs (138) ermöglicht.

5. Baugruppe nach Anspruch 4, dadurch gekennzeichnet, daß das Kontaktverdrängungsmittel eine Kontaktöffnungsvorrichtung (66) umfaßt.

6. Baugruppe nach einem der vorangegangenen Ansprüche, dadurch gekennzeichnet, daß die an den Enden angeordneten Gehäuse (12) mit zusätzlichen Kontaktausrichtkörpern (14) ausgebildet sind.

7. Baugruppe nach einem der vorangegangenen Ansprüche, dadurch gekennzeichnet, daß die Baugruppe (10) eine Aderführung (64) umfaßt, wobei die CDA-Baugruppenkabel (22) als verdrillte Doppelladern mit Doppelleitungsanschlußenden (110) ausgebildet sind, wobei die Aderführung (64) eine Adereintrittsseite und eine schmalere Aderanschlußseite aufweist, wobei die Aderführung (64) Aderwege mit im wesentlichen gleicher Länge von der Adereintrittsseite zu der Aderanschlußseite definiert, wobei die Aderführung (64) zwischen dem CDA-Baugruppenkabel (22) und dem Kontaktausrichtkörper (14) angeordnet ist.

8. Baugruppe nach Anspruch 7, dadurch gekennzeichnet, daß die Baugruppe (10) ein überformtes Gehäuse (58) aufweist, das mit dem Übertragungkabel (22), der Aderführung (64) und dem Kontaktausrichtkörper (14) verbunden ist, wobei der Kontaktausrichtkörper (14) mit Formgehäuseaufnahmefassungen (96) ausgebildet ist, wobei die verdrillten Doppelleitungsanschlußenden (110) mit den Kontaktelementen (62) elektrisch verbunden sind.

9. Baugruppe nach Anspruch 8, dadurch gekennzeichnet, daß der Teil des Kontaktausrichtkörpers (14), die Aderführung (64) und ein Teil des Kabels (22) zusammen in einer Form eingespritzt sind.

10. Baugruppe nach einem der vorangegangenen Ansprüche, dadurch gekennzeichnet, daß die Schnittstellenendebaugruppen (6, 8) eine Tragschienen (60) umfassen, wobei der Abgriff (138) ein Tragschieneneingriffsteil (144) zum Eingriff in die Tragschiene (60) umfaßt.

11. Baugruppe nach einem der vorangegangenen Ansprüche, dadurch gekennzeichnet, daß die Baugruppe mindestens einen Stromkreisindikator (20) und ein Farbindikatormarkierelement (16) umfaßt, die mit der Tragschiene (60) verbindbar sind.

12. Baugruppe nach einem der vorangegangenen Ansprüche, dadurch gekennzeichnet, daß die Gehäuse (12) jeweils mehrere männliche Umhüllungsteile (38) und weibliche Umhüllungsteile (40) umfassen, die einen Raum zur Aufnahme eines Kontaktausrichtkörpers (14) definieren, wobei die männlichen Umhüllungsteile (38) eines Gehäuses (12) zusammensteckbar mit den weiblichen Umhüllungsteilen (40) eines anderen Gehäuses (12) ausgebildet sind, und die Gehäuse (12) Verriegelungsmittel zum Verriegeln miteinander umfassen.

13. Baugruppe nach Anspruch 12, dadurch gekennzeichnet, daß das Verriegelungsmittel eine Zunge (34) und einen Zungenaufnahmeteil umfaßt, wobei die Zunge (34) mit einer Eingriffsfase (42) zum Verriegeln an einer hinteren Kante eines Aufnahmeteils eines identischen Gehäuses (12) ausgebildet ist.

14. Baugruppe nach einem der vorangegangenen Ansprüche, dadurch gekennzeichnet, daß die Gehäuse (12) aus Kunststoff mit eingebetteten Metallelementen ausgebildet sind.

15. Baugruppe nach einem der Ansprüche 5 bis 14, dadurch gekennzeichnet, daß die Kontaktöffnungsvorrichtung (66) eine Abgriffsfläche (56) mit Steuer-/ Verriegelungspfosten (70) umfaßt, wobei der Abgriff (138) eine Kontaktöffnungsvorrichtungseingriffsfläche (150) mit Pfostenaufnahmeöffnungen (153), eine Abgriffsübertragungsleitung (142) und Kontaktteile (148) umfaßt, wobei die Kontaktöffnungsvorrichtungseingriffsfläche (150) beim Einstecken des Abgriffs (138) mit den Steuer- / Verriegelungspfosten (70) der Abgriffsfläche (56) zusammenwirkt, um die Kontaktlemente (62) in eine Nichtkontaktposition zu drängen und das Kontaktelement (62) bei weiterem Einstecken des Abgriffs (138) in eine Abgriffsposition zu bewegen, wobei die Pfosten (70) sich in entsprechende Pfostenaufnahmeöffnungen (153) erstrecken, wodurch die Kontaktelemente (62) in eine Kontaktposition zurückkehren und die Kontaktelemente (62) mit den Abgriffskontaktteilen (148) elektrisch Kontakt herstellen.

16. Baugruppe nach Anspruch 15, dadurch gekennzeichnet, daß die von dem Kontaktausrichtkörper (14) des Gehäuses (12) einer anderen Verbinderschnittstellenbaugruppe getragenen Kontaktelemente (62) einer anderen Kontaktöffnungsvorrichtung (66) mit einer Abgriffseingriffsfläche (150) mit Steuer-/ Verriegelungspfosten (79) zugeordnet sind, wobei der Abgriff (138) eine zweite Kontaktöffnungsvorrichtungseingriffsfläche ohne Pfostenaufnahmeöffnungen aufweist, wodurch mindestens einige der vom Kontaktausrichtkörper (14) des Gehäuses (12) der anderen Verbinderschnittstellenbaugruppe getragenen Kontaktelemente (62) beim Einstecken des Abgriffs (138) in eine Nichtkontaktposition gedrängt werden, wobei der Abgriff (138) Abgriffskontakte nur auf einer Kontaktseite (152) enthält, wodurch die von dem Kontaktaussichtkörper (14) des Gehäuses (12) der anderen Verbinderschnittstellenbaugruppe getragenen Kontaktelemente getrennt sind, während der Abgriff (138) sich in der Abgriffposition zum Unterbrechen mindestens eines elektrischen Weges durch die Verbinderschnittstellenbaugruppe zu Übertragungsleitungen eines nachgeschalteten Übertragungskabels befindet.

17. Verfahren zum Herstellen einer Telekommunikations-/Datenverarbeitungs- und verbinderbaugruppe, wobei das Verfahren folgende Schritte umfaßt:
a) Bereitstellen eines Kontaktausrichtkörpers (14) mit Nuten für Kontakte und Räumen zur Aufnahme von aderseitigen Kontaktenden,
b) Positionieren von Kontakten (62) in den Nuten, wobei die Kontakte (62) Aderkontaktenden aufweisen, die sich in de Aderkontakt und Aufnahmeräume erstrecken und Schnittstellenenden aufweisen,
c) Bereitstellen eines Kontaktverdrängungselements (10), das mit den Schnittstellenenden der Kontakte (62) verbunden ist,
d) Bereitstellen von Aderführungen (64) mit mehreren Aderkanälen (88), wobei die Aderführungen (64) ein Kabelende geringer Breite und ein Kontaktausrichtkorperende größerer Breite aufweisen, wobei die Aderkanäle (88) einen Aderweg mit im wesentlichen identischen Längen bilden, der sich von dem Kabelende zu dem Kontaktausrichtkörperende erstreckt,
e) Bereitstellen eines Kabels (22) mit Aderanschlußenden,
f) Anordnen der Aderanschlußenden in den Aderkanälen (88) der Aderführung (64) in einem Kontaktteil der sich aus den Aderkanälen erstreckenden Anschlußenden;
g) elektrisches Verbinden der Kontaktteile mit entsprechenden Kontakten an aderseitigen Enden der Kontakte und
h) Vereinen des Kables (22), der Aderführung (64) und der Kontaktverdrängungsbaugruppe (10) mit einem überformten Gehäuse (58) durch Positionieren eines Teils des Kabels (22), der Aderführung (64) und eines Teils der Kontaktverdrängungsbaugruppe in einer Form und Einspritzen von Material in die Form zur Bildung des überformten Gehäuses (58).
